Europäisches Patentamt

European Patent Office

Office européen des brevets

(19)

(11) **EP 1 051 706 B1**

(12) **FASCICULE DE BREVET EUROPEEN**

(45) Date de publication et mention
de la délivrance du brevet:
**02.04.2003 Bulletin 2003/14**

(21) Numéro de dépôt: **99901631.4**

(22) Date de dépôt: **26.01.1999**

(51) Int Cl.7: **G11B 11/10**, G11B 7/12

(86) Numéro de dépôt international:
**PCT/FR99/00150**

(87) Numéro de publication internationale:
**WO 99/038160 (29.07.1999 Gazette 1999/30)**

(54) **DISPOSITIF D'INSCRIPTION/LECTURE OPTIQUE D'UN SUPPORT D'INFORMATION**

OPTISCHE AUFZEICHNUNGS-/WIEDERGABEVORRICHTUNG FÜR INFORMATIONSTRÄGER

DATA MEDIUM OPTICAL RECORDING/READING DEVICE

(84) Etats contractants désignés:
**DE FR GB IT**

(30) Priorité: **27.01.1998 FR 9800852**

(43) Date de publication de la demande:
**15.11.2000 Bulletin 2000/46**

(73) Titulaire: **Thales**
**75008 Paris (FR)**

(72) Inventeurs:
• **VALET, Thierry,**
**Thomson-CSF Prop. Int. Dept. Brev.**
**94117 Arcueil Cedex (FR)**
• **FALLOU, Olivier,**
**Thomson-CSF Prop. Int.Dept. Brev.**
**94117 Arcueil Cedex (FR)**

(56) Documents cités:
**US-A- 5 689 480        US-A- 5 696 372**

• **GROBER R D ET AL: "OPTICAL ANTENNA: TOWARDS A UNITY EFFICIENCY NEAR-FIELD OPTICAL PROBE" APPLIED PHYSICS LETTERS, vol. 70, no. 11, 17 mars 1997, pages 1354-1356, XP000689035**
• **POHL D W ET AL: "NEAR-FIELD OPTICS: LIGHT FOR THE WORLD OF NANO" JOURNAL OF VACUUM SCIENCE AND TECHNOLOGY: PART B, vol. 12, no. 3, 1 mai 1994, pages 1441-1446, XP000464719**
• **POHL D W ET AL: "RADIATION COUPLING AND IMAGE FORMATION IN SCANNING NEAR-FIELD OPTICAL MICROSCOPY" THIN SOLID FILMS, vol. 273, no. 1/02, février 1996, pages 161-167, XP000624936**
• **PATENT ABSTRACTS OF JAPAN vol. 096, no. 002, 29 février 1996 & JP 07 254185 A (MATSUSHITA ELECTRIC IND CO LTD), 3 octobre 1995**

EP 1 051 706 B1

**Description**

L'invention concerne un dispositif d'inscription/ lecture optique d'un support d'information. A titre d'exemple, ce support peut être un support optique ou un support magnétique ou magnéto-optique tel qu'un disque magnétique.

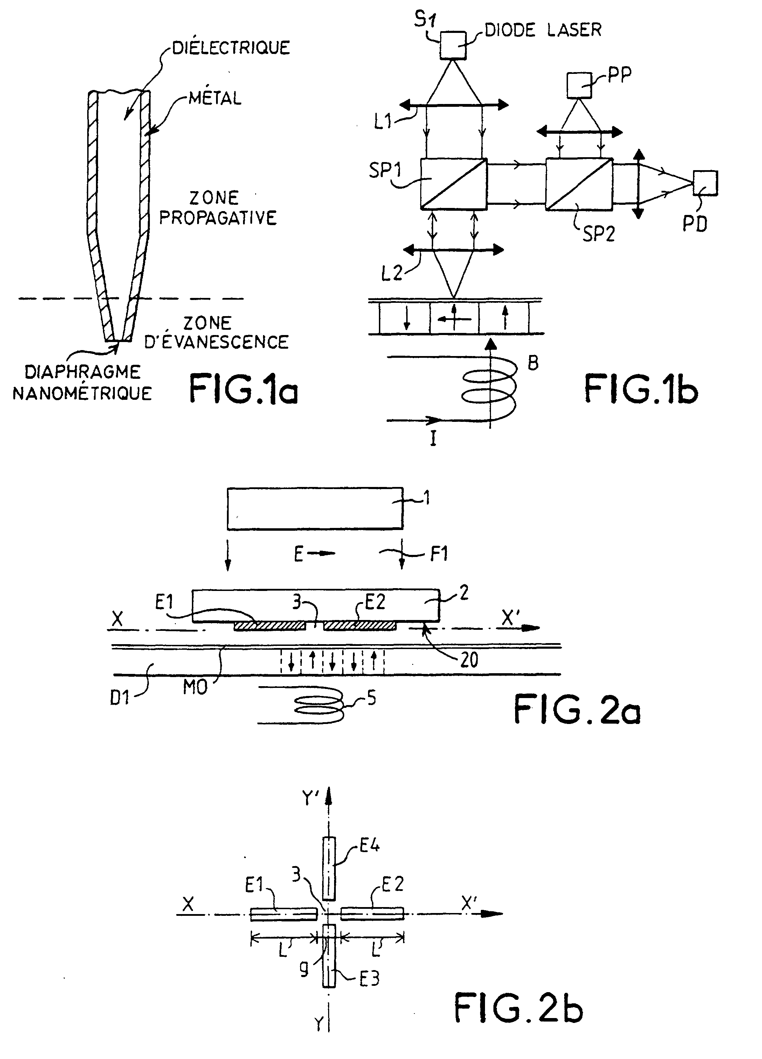

La figure 1b représente un système classique d'inscription/lecture sur support magnétique. Dans un tel système, une source laser S1 émet un faisceau lumineux qui est focalisé par des lentilles L1 et L2 sur le support d'enregistrement D1. Celui-ci est en matériau magnéto-optique, ferrimagnétique par exemple tel qu'un alliage de terres rares (Terbium/Fer par exemple). Ce matériau présente la propriété d'agir sur la polarisation de la lumière qu'il reçoit en fonction de son aimantation. Le faisceau lumineux est réfléchi par le support d'enregistrement en ayant éventuellement sa polarisation modifiée par une interaction avec l'aimantation du support d'information. Le faisceau réfléchi par D1 est en partie aiguillé par le séparateur de faisceau SP1 vers le séparateur de faisceau SP2. Le séparateur SP2 est un séparateur de polarisation qui aiguille une polarisation vers le photodétecteur PD et l'autre polarisation vers l'autre photodétecteur PP.

Pour l'enregistrement, un tel système permet l'enregistrement par échauffement localisé à l'aide d'un faisceau de niveau énergétique suffisant transmis par la source 1. Sous l'effet d'un champ magnétique B appliqué au support d'enregistrement celui-ci lors de son refroidissement voit son aimantation orientée localement selon la direction du champ magnétique appliquée.

Dans un tel système, la taille minimale d'une unité d'information est limitée par la diffraction. Elle vaut sensiblement

$$\frac{\lambda}{2(ON)}$$

$\lambda$ étant la longueur d'onde du faisceau lumineux et ON, l'ouverture numérique du faisceau.

La taille des éléments d'informations et donc la densité des informations enregistrées est limitée par la longueur d'onde du faisceau. Pour diminuer la taille de la tache du faisceau sur le support d'information, il est en particulier possible de faire appel à des techniques du type utilisées dans la microscopie optique en champ proche, comme décrit par exemple dans le document US-A-5 696 372, qui reflète le préambule de la revendication 1.

La technique la plus classique de microscopie optique en champ proche consiste à utiliser un diaphragme de taille inférieure à la tâche de diffraction. Si le diaphragme est placé suffisamment près de l'objet à observer, la résolution obtenue est essentiellement égale à la taille du diaphragme. Des microscopes optiques en champ proche basés sur ce principe ont été décrits et réalisés par différentes équipes (voir articles D.W. Pohl et al. Applied Physic. Letters 44, 652 (1984) ainsi que E. Betzig et al. Applied Physic Letters 51, 2088 (1987)).

Bien que cette approche ait permis de démontrer des résolutions de l'ordre de 50 nm avec des longueurs d'onde d'illumination de l'ordre de 500 nm (résolution $\simeq \lambda/10$), elle souffre d'une difficulté fondamentale : le très faible niveau de signal optique détectable.

En pratique, et afin de pouvoir en particulier imager des surfaces non parfaitement planes, le diaphragme est physiquement réalisé à l'extrémité d'une fibre optique ou d'une micro-pipette métallisée et étirée afin d'être amincie à son extrémité, comme on peut le voir en figure 1a.

Une telle sonde pour la microscopie optique en champ proche, que l'on peut considérer comme un guide d'ondes électromagnétiques métallisé de diamètre variable, est généralement amenée et déplacée en proximité de la surface à imager à l'aide d'actuateurs piézo-électriques, différents signaux d'asservissement pouvant être générés afin d'opérer un balayage à hauteur constante.

Trois modes de fonctionnement sont possibles:

**1) Fonctionnement en transmission**

Le guide est connecté à l'extrémité opposée au diaphragme à une source de lumière, en général un laser. La part de lumière couplée dans le guide se propage jusqu'au diaphragme, où une petite fraction est transmise. Dans le cas où l'on observe la surface d'un objet au moins partiellement transparent, un système optique conventionnel peut collecter la lumière transmise à travers l'objet et la diriger sur un photodétecteur. Le signal ainsi photodétecté au cours du balayage de la surface par la sonde permet de reconstruire une image point par point.

**2) Fonctionnement en collection**

Ce mode d'imagerie consiste à illuminer la surface imagée à l'aide d'une optique classique opérant par transmission à travers l'objet. On utilise l'extrémité de la sonde pour collecter le champ proche optique au voisinage de la surface. La lumière ainsi couplée dans la sonde est alors amenée jusqu'à un photodétecteur.

**3) Fonctionnement en réflexion**

Dans ce troisième et dernier mode, qui peut être vu comme une combinaison des deux précédents, la sonde sert tout à la fois à illuminer et à collecter. Un système optique, par exemple comportant un élément semitransparent, permet de connecter simultanément l'extrémité de la sonde opposée au diaphragme à une source lumineuse et à un photodétecteur. On exploite alors les variations de la puissance réfléchie par l'extrémité de la fibre.

Aucun de ces trois modes ne permet l'acquisition de signaux de grande qualité, et ceci pour deux raisons :

a) comme on peut le voir en figure 1, la forte réduction de diamètre du guide au voisinage de son extrémité définie une zone d'évanescence, c'est-à-dire une région du guide dans laquelle l'onde optique n'est plus propagative mais évanescente. L'amplitude d'une onde optique se propageant vers le diaphragme, ou issue de celui-ci, va connaître donc à la traversée de cette région une atténuation d'un facteur $e^{-d/\delta}$, où d est la longueur de la zone et $\delta$ une longueur caractéristique d'atténuation dépendant de la structure détaillée du guide.

b) l'efficacité de transmission ou de collection du diaphragme définie comme le rapport entre la puissance collectée ou transmise et le produit (densité de puissance incidente multipliée par la surface du diaphragme) est proportionnelle à

$$\left(\frac{a}{\lambda}\right)^4$$

(loi de Rayleigh de la diffraction par les objets petits devant $\lambda$) où a est le rayon du diaphragme (par définition petit devant $\lambda$) et $\lambda$ la longueur d'onde utilisée.

Dans les conditions pratiquement utilisables, ces deux facteurs conjugués conduisent à la détection de puissances optiques, ayant interagi effectivement en champ proche avec la surface, de l'ordre de 10 nW pour des illuminations de l'ordre de quelques dizaines de mW (limite utilisable au delà de laquelle des destructions de sonde sont observées). Pour un taux de modulation de 5 % associé aux variations locales de propriétés de la surface observée, et à 500 nm de longueur d'onde cela conduit à un rapport de signal à bruit (on suppose le bruit de détecteur négligeable) de 78 dB dans une bande passante de 1 Hz, qui se réduit à 18 dB pour une bande passante de 1 MHz. On voit donc que l'acquisition d'une image 1 000 x 1 000 points ne peut s'envisager en moins d'une seconde.

La mise en oeuvre de telles sondes de microscopie en champ proche, comme dispositif de lecture optique et en particulier magnéto-optique d'une surface support d'informations, ne permet donc pas d'envisager des vitesses de transfert de données élevées ($\geq$ 10 Mb/s) en lecture.

Les très faibles puissances disponibles à l'extrémité de ces sondes constituent également un obstacle à la mise en oeuvre d'une méthode d'écriture liée à un échauffement local, telle que décrite précédemment.

D'autre part, la structure même des sondes décrites, fibres optiques ou pipettes étirées puis métallisées, impose un mode de fabrication individuel, qui s'avère poser des problèmes de reproductibilité (comme on l'a vu, l'efficacité de la sonde varie comme la puissance 4ème de la taille).

L'invention permet de résoudre ces problèmes.

Elle a donc pour objet un dispositif d'inscription/lecture optique d'un support d'informations comportant un substrat transparent possédant une face sensiblement plane portant au moins une paire d'électrodes délimitant une aire d'entrefer, et une source optique éclairant lesdites électrodes à l'aide d'un faisceau optique, caractérisé par le fait que la dimension de l'entrefer correspond sensiblement à la dimension de l'information à inscrire ou à lire, par le fait que la longueur de chaque électrode est sensiblement proportionnelle à la longueur d'onde de ladite onde électromagnétique de façon à assurer une condition de résonance entre les électrodes et l'onde électromagnétique incidente, et par le fait qu'une composante du champ électrique de l'onde électromagnétique incidente est parallèle à la direction d'alignement des électrodes d'une paire d'électrodes.

Les différents objets et caractéristiques de l'invention apparaîtront plus clairement dans la description qui va suivre et dans les figures annexées qui représentent :

- les figures 1a et 1b, des systèmes connus dans la technique ;
- les figures 2a à 2c, un exemple de réalisation de base du système de l'invention;
- les figures 3a à 3d, différentes formes d'électrodes du dispositif de l'invention ;
- la figure 4, une conception de la tête d'inscription/lecture selon l'invention ;
- les figures 5 et 6, des variantes de réalisation de la tête d'inscription/lecture selon l'invention ;
- les figures 7a et 7b, un exemple de réalisation du dispositif de l'invention.

En se reportant aux figures 2a à 2c, nous allons décrire un exemple de réalisation du système de l'invention.

Ce système comporte un substrat 2 portant sur une face 20 au moins deux paires d'électrodes E1-E2 et E3-E4 disposées en croix. Les électrodes E1-E2 sont alignées selon la direction XX' et les électrodes E3-E4 sont alignées selon la direction YY'. Les électrodes de chaque paire sont séparées par un espace appelé entrefer qui selon l'exemple de la figure 2b est sensiblement de même longueur g pour les deux paires d'électrodes, mais l'égalité de ces deux espaces n'est pas obligatoire. La largeur d'un entrefer peut avoir une valeur comprise entre quelques nanomètres et quelques dizaines de nanomètres.

Ces électrodes sont éclairées par un faisceau optique F1 transmis par une source lumineuse 1. La direction d'une composante de champ électrique E de la lumière incidente sur les électrodes est parallèle à la direction XX'.

Pour obtenir la résonance sous l'effet d'une onde de longueur d'onde déterminée, la longueur de chaque électrode d'une paire d'électrode dépend de la longueur d'onde du faisceau F1. Pour obtenir cette résonance, la relation entre la longueur d'une électrode et la longueur d'onde de F1 dépend de la nature du matériau du substrat et du milieu environnant (indices de réfraction), du matériau (indice de réfraction) constituant les électrodes, de l'épaisseur et de la largeur des électrodes. De façon générale, pour un substrat déterminé, un milieu environnant qui est de l'air, des électrodes en matériau déterminé ainsi que d'épaisseurs et de largeurs déterminées, la longueur de chaque électrode est sensiblement proportionnelle à la longueur d'onde.

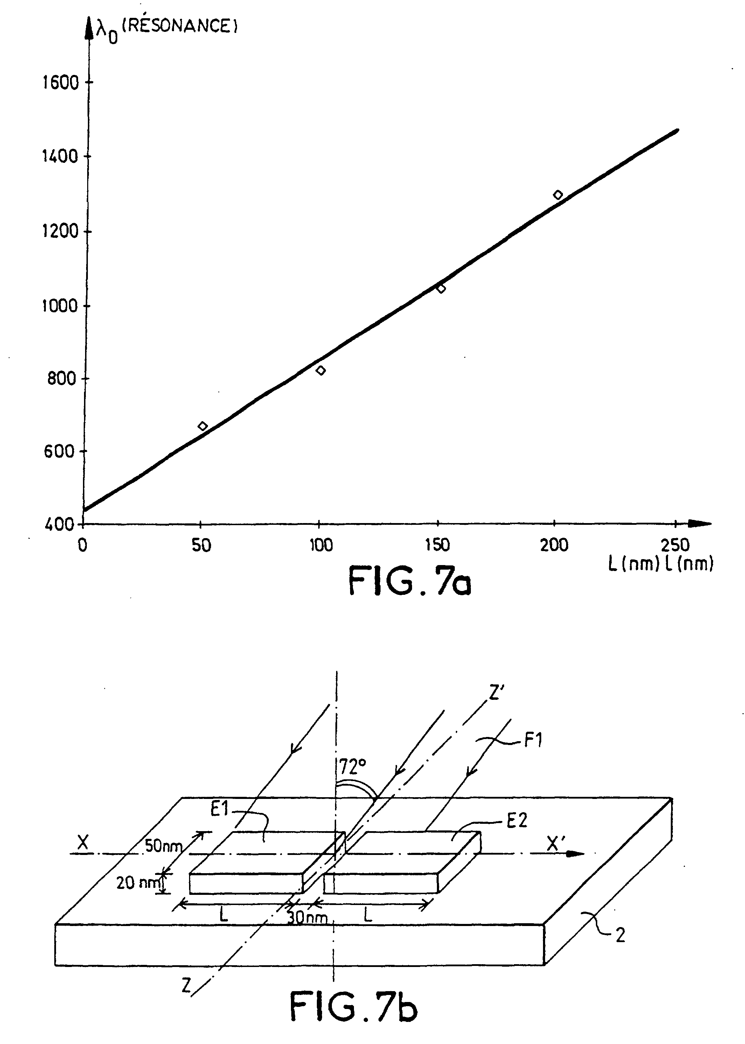

La figure 7a met en évidence que pour des électrodes en or, la longueur d'onde permettant d'obtenir la résonance dépend linéairement de la longueur des électrodes.

La courbe de la figure 7a a été obtenue avec un dispositif tel que représenté en figure 7b et présentant les caractéristiques suivantes :

- substrat d'indice n=2 ;
- électrodes en or
- largeur des électrodes : 50 nm
- épaisseur des électrodes : 30 nm
- largeur g de l'entrefer : 30 nm
- inclinaison du faisceau par rapport au plan des électrodes 72 degrés
- plan d'incidence perpendiculaire à la direction d'alignement des électrodes
- champ électrique parallèle à la direction d'alignement des électrodes.

De plus, le système comporte :

- un dispositif d'induction d'un champ magnétique 5 symbolisé par un bobinage sur la figure 2a et capable d'induire un champ magnétique. Cela sera utilisé lors du fonctionnement dans le mode inscription d'informations sur le support d'informations :

- un dispositif de photodétection 6 situé sur l'axe ZZ' qui est normal au plan XX-YY'. Ce dispositif est utilisé lors de la lecture du support d'informations. Ce dispositif 6 peut être remplacé par un dispositif de collection et de transmission de la lumière vers un dispositif de photodétection déporté par rapport à l'axe ZZ'.

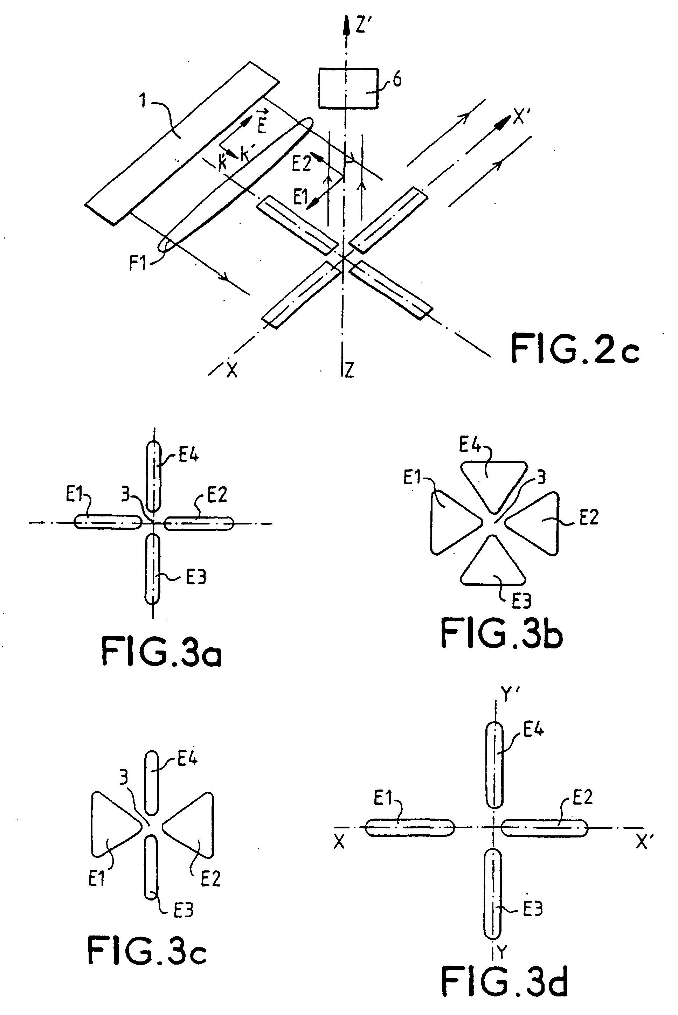

Comme cela est représenté en figure 2c, le faisceau F1 éclaire les électrodes sous incidence différente de la normale. De cette façon, la réflexion spéculaire du faisceau se fait selon une direction différente de la normale et n'est donc pas dirigée vers le photodétecteur 6.

Fonctionnement en lecture

Un support d'informations D1 se déplace à proximité des électrodes et parallèlement au plan des électrodes. Ce support est en matériau magnéto-optique ou possède une couche MO de matériau magnéto-optique sur sa face située en regard des électrodes de telle façon que l'orientation de l'aimantation du matériau magnéto-optique a une influence sur la polarisation de la lumière qu'il reçoit.

Chaque paire d'électrodes E1-E2 et E3-E4 peut être vue comme un résonateur électromagnétique pouvant être excité indépendamment par une onde électromagnétique incidente.

Le résonateur constitué par les électrodes E1-E2 est excité par le faisceau F1 dont une composante du champ électrique est parallèle à l'axe XX'.

Sous l'effet de cette excitation, la paire d'électrodes E1-E2 réémet une onde électromagnétique de polarisation sensiblement parallèle à l'axe XX'.

L'espace compris entre les électrodes E1 et E2 est le siège d'une concentration du champ électrique orienté suivant l'axe XX'.

Lors de la lecture du support D1, la structure d'électrode se trouve au voisinage de la couche magnéto-optique MO. Le couplage du champ électrique ainsi concentré avec l'aimantation du milieu magnéto-optique va créer, dans le milieu, une polarisation oscillante à la fréquence excitatrice. Localement, cette polarisation a pour valeur :

$$\vec{P} = \chi_{MO} \ \vec{M} {\scriptstyle \wedge} \vec{E}i$$

Le dipôle induit peut être vu comme une source susceptible d'exciter la deuxième paire d'électrodes E3-E4 qui fonctionne également comme un résonateur et donne lieu à l'émission d'une onde de polarisation sensiblement parallèle à la direction YY'.

Les deux ondes émises par les deux paires d'électrodes E1-E2 et E3-E4 sont particulièrement intenses selon une direction perpendiculaire ZZ' au plan des électrodes. Ces deux ondes se combinent pour donner lieu à une onde de polarisation elliptique qui est reçue par le dispositif de photodétection 6. Celui-ci permet d'analyser l'état de polarisation de l'onde lumineuse ainsi diffractée. L'état de polarisation détecté permet de connaître l'orientation de l'aimantation lue sur le support d'informations.

Le dispositif de l'invention permet donc de lire une information magnétique dont la dimension peut être de l'ordre de grandeur de la dimension de l'entrefer (une dizaine de quelques 10 nm).

## Fonctionnement en inscription

Pour le fonctionnement en inscription, en considérant que la source 1 émet un faisceau F1 dont la lumière est polarisée linéairement selon une direction parallèle à XX', seule la paire d'électrodes E1-E2 est utilisée et fonctionne comme précédemment en résonateur donnant lieu à concentration du champ électrique dans l'entrefer 3. Un support d'information magnétique placé à proximité de cet entrefer peut être échauffé. Selon l'intensité du faisceau F1 et selon l'amplification, il est possible par cet échauffement d'abaisser la coercivité du matériau magnétique. Ensuite, sous l'influence d'un champ magnétique suffisant généré par le dispositif d'induction 5, la zone de coercivité abaissée et elle seule voit son aimantation réorientée.

A titre d'exemple de réalisation, la distance g (entrefer) séparant deux électrodes d'une même paire est d'environ 10 nm. Elles peuvent être en or, argent, cuivre, aluminium ou un alliage de l'un de ces matériaux.

Les électrodes peuvent prendre différentes formes telles que celles représentées en figures 3a à 3c.

En figure 3a, les électrodes sont de forme allongée avec des extrémités arrondies.

En figure 3b, les électrodes sont triangulaires et présentent des surfaces plus importantes ce qui permet d'avoir un meilleur couplage avec l'onde lumineuse incidente.

En figure 3c, les électrodes ont des formes qui sont une combinaison des électrodes des figures 3a et 3b. Les électrodes E1 et E2 sont triangulaires et les électrodes E3 et E4 sont allongées.

Les configurations d'électrodes des figures 3a à 3c permettent de lire un support d'informations dans lequel les informations sont enregistrées sous forme d'aimantations perpendiculaires au plan de la surface (comme en figure 2a).

La figure 3d représente une configuration permettant de lire des informations enregistrées sous forme d'aimantations parallèles au plan du support. La direction YY' des électrodes E3-E4 est sécante avec la direction XX' des électrodes E1-E2, dans une zone située sensiblement sur un bord de l'entrefer séparant les électrodes E1 et E2.

Comme indiqué précédemment, les électrodes sont réalisées sur une face d'un substrat qui est de préférence transparent à l'onde optique émise par la source 1. Ce substrat est réalisé sous la forme d'un patin dont la face portant les électrodes est dirigée vers le support d'informations. La forme du patin et sa distance par rapport au support d'information sont telles qu'un déplacement rapide du support d'informations conduit à la création d'un coussin d'air de faible épaisseur entre le substrat et le support d'information et donc à une lévitation hydrodynamique du substrat 2 au-dessus du support d'informations.

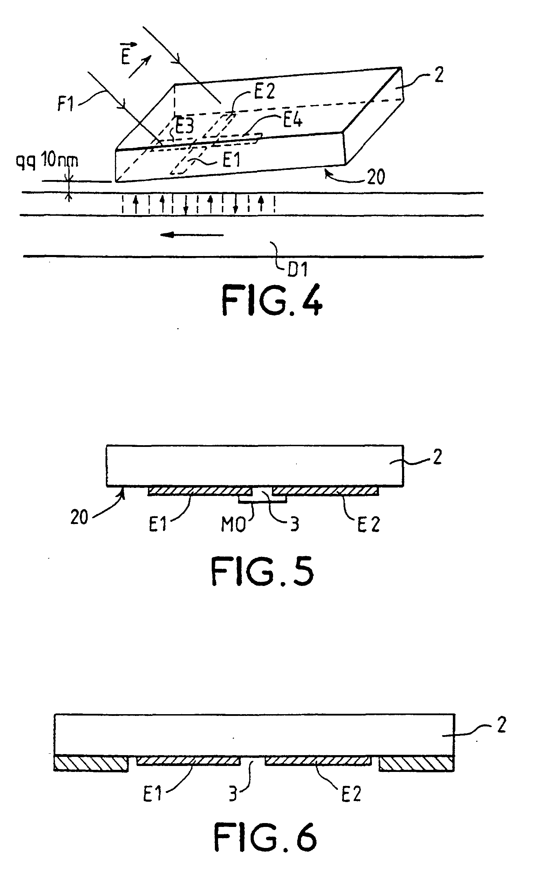

Selon une variante de réalisation de l'invention représentée en figure 5, les électrodes E1 à E4 ou tout au moins l'entrefer 3 est recouvert d'une couche d'un matériau MO2 présentant des propriétés magnéto-optiques (matériau ferromagnétique). Un tel dispositif permet de lire tout type d'information magnétique.

La description qui précède a été faite en relation avec la lecture/inscription d'un support magnétique ou magnéto-optique. Cependant, l'invention est applicable à d'autres supports lisibles optiquement. Il s'agit par exemple de supports dans lesquels l'inscription se fait par ablation d'une couche d'enregistrement, par changement de phase du milieu d'enregistrement, ou par changement des propriétés chimiques d'un matériau (par absorption d'une onde électromagnétique), etc.

## Fonctionnement en lecture

Comme dans le cas précédent, le support d'information se déplace à proximité des électrodes et parallèlement au plan des électrodes. Le dispositif de lecture a pour rôle de détecter les modifications des propriétés (indice de réfraction par exemple) du support d'information D1.

Pour une telle lecture, le dispositif ne nécessite qu'une seule paire d'électrodes E1-E2. Comme précédemment, cette paire d'électrodes peut être vue comme un résonateur électromagnétique qui est excité par l'onde électromagnétique incidente (faisceau F1) dont une composante du champ électrique est parallèle à l'axe XX'. Sous l'effet de cette excitation, la paire d'électrodes E1-E2 réémet une onde électromagnétique de polarisation sensiblement parallèle à l'axe XX'. En présence d'une modification locale des propriétés du support D1 on observe une modulation de l'onde électromagnétique réémise par la paire d'électrodes. Cette modulation va être alors détectée par le dispositif de photodétection 6.

## Fonctionnement en inscription

Le fonction en inscription se fait par échauffement du support d'information en raison de la concentration du champ électrique comme cela a été décrit précédemment. L'inscription peut se faire également en raison d'un processus d'absorption électromagnétique lié à la concentration locale de champ dans l'entrefer 3 (action photochimique sur le support).

La figure 6 représente une vue en coupe d'une variante de l'invention dans laquelle la surface 20 du substrat non occupée par les électrodes est recouverte au moins en partie par une couche 21 résistant à l'usure. L'épaisseur de cette couche est au moins égale à l'épaisseur des électrodes. A titre d'exemple, cette épaisseur peut être de 10 à 20 nm.

## Revendications

1. Dispositif d'inscription/lecture optique d'un support d'informations (D1) comportant un substrat (2) transparent possédant une face sensiblement plane (20) portant au moins une paire d'électrodes (E1-E2) délimitant une aire d'entrefer (3), et une source optique (1) éclairant lesdites électrodes à l'aide d'un faisceau optique (F1), **caractérisé par le fait que** la dimension de l'entrefer correspond sensiblement à la dimension de l'information à inscrire ou à lire, **par le fait que** la longueur de chaque électrode est sensiblement proportionnelle à la longueur d'onde d'une onde électromagnétique incidente de façon à assurer une condition de résonance entre les électrodes et l'onde électromagnétique incidente, et **par le fait qu'**une composante du champ électrique de l'onde électromagnétique incidente est parallèle à la direction d'alignement des électrodes d'une paire d'électrodes.

2. Dispositif selon la revendication 1, **caractérisé par le fait que** la relation entre la longueur d'une électrode et la longueur d'onde de l'onde électromagnétique incidente est déterminée en fonction des indices de réfraction du matériau du substrat et du milieu environnant, de l'indice de réfraction du matériau constituant les électrodes, de l'épaisseur et de la largeur des électrodes.

3. Dispositif selon la revendication 2, **caractérisé en ce que** les électrodes étant en or, la longueur de chaque électrode est proportionnelle à ladite longueur d'onde de façon à assurer une condition de résonance entre les électrodes et l'onde électromagnétique incidente.

4. Dispositif selon la revendication 1, **caractérisé en ce que** le support d'information est magnétique et que la lecture se fait par effet magnéto-optique.

5. Dispositif selon la revendication 4, **caractérisé en ce qu'**il comporte :

   - deux paires d'électrodes (E1-E2 et E3-E4) orthogonales disposées en croix et délimitant à l'intersection de la croix une aire dont les dimensions correspondent sensiblement aux dimensions de l'information à inscrire ou à lire ;
   - un dispositif de collection de la lumière placé sensiblement selon une direction perpendiculaire au plan des électrodes au point d'intersection de la croix et transmettant la lumière vers un dispositif de photodétection.

6. Dispositif selon la revendication 1, **caractérisé en ce qu'**il comporte un dispositif d'induction d'un champ magnétique (5) disposé à proximité du support d'information et de ladite aire d'entrefer (3).

7. Dispositif selon la revendication 6, **caractérisé en ce que** le dispositif d'induction de champ magnétique et le substrat portant les électrodes sont disposés de part et d'autre du support d'information.

8. Dispositif selon la revendication 1, **caractérisé en ce que** la distance entre deux électrodes d'une même paire d'électrodes est d'une dizaine ou de quelques dizaines de nanomètres.

9. Dispositif selon la revendication 1, **caractérisé en ce que** les électrodes d'une même paire sont symétriques par rapport au centre de ladite aire d'entrefer (3).

10. Dispositif selon la revendication 4, **caractérisé en ce qu'**une première paire d'électrodes (E1-E2) est alignée selon une première direction parallèle à une composante du champ électrique de l'onde électromagnétique et qu'une deuxième paire d'électrodes est alignée selon une deuxième direction qui est sécante avec la première direction sensiblement à un bord de l'entrefer déterminé par la première paire d'électrode.

11. Dispositif selon la revendication 1, **caractérisé en ce que** chaque électrode a une forme allongée.

12. Dispositif selon la revendication 1, **caractérisé en ce que** chaque électrode a une forme sensiblement triangulaire et a un sommet du triangle dirigé vers ladite aire d'entrefer (3).

13. Dispositif selon la revendication 5, **caractérisé en ce que** les électrodes de la première paire d'électrodes (E1-E2) ont une forme triangulaire et les électrodes de la deuxième paire d'électrodes (E3-E4) ont une forme allongée.

14. Dispositif selon l'une des revendications 10 à 12, **caractérisé en ce que** les extrémités des électrodes dirigées vers l'aire d'entrefer (3) sont arrondies.

15. Dispositif selon l'une des revendications 1 ou 4, **caractérisé en ce que** la direction dudit faisceau optique (F1) n'est pas perpendiculaire au plan des électrodes.

16. Dispositif selon la revendication 4, **caractérisé en ce qu'**au moins la partie de l'entrefer située entre les électrodes est recouverte par une couche d'un matériau présentant des effets magnéto-optiques.

17. Dispositif selon la revendication 4, **caractérisé en ce qu'**il comporte un dispositif de photodétection (6) comprenant un analyseur de polarisations.

**18.** Dispositif selon la revendication 1, **caractérisé en ce que** la face du substrat portant les électrodes possède une forme telle qu'un déplacement d'un support d'information par rapport à ces électrodes est de nature à créer un coussin d'air entre la face du substrat et le support d'information.

**19.** Dispositif selon la revendication 18, **caractérisé en ce que** ladite face du substrat est inclinée par rapport au plan du support d'information.

**20.** Dispositif selon la revendication 1, **caractérisé en ce qu'**une partie au moins de la surface du substrat non occupée par les électrodes comporte une couche d'un matériau résistant à l'usure, d'épaisseur au moins égale à l'épaisseur des électrodes.

**21.** Utilisation du dispositif selon la revendication 9, **caractérisée en ce qu'**elle est destinée à l'inscription/lecture d'un support d'informations dans lequel les informations sont stockées sous forme de zones aimantées perpendiculairement au plan du support, les zones aimantées du support d'informations étant situées à proximité du dispositif d'inscription/lecture.

**22.** Utilisation du dispositif selon la revendication 10, **caractérisée en ce qu'**elle est destinée à l'inscription/lecture d'un support d'informations dans lequel les informations sont stockées sous forme de zones aimantées parallèlement au plan du support, les zones aimantées du support d'informations étant situées à proximité du dispositif d'inscription/lecture.

**23.** Utilisation du dispositif selon la revendication 4, **caractérisée en ce qu'**elle est destinée à l'inscription/lecture d'un support d'informations comportant une couche d'un matériau présentant des effets magnéto-optiques, ledit support d'information étant situé à proximité du dispositif d'inscription/lecture.

**24.** Utilisation du dispositif selon la revendication 1, **caractérisé en ce qu'**elle est destinée à l'inscription/lecture de support optique d'informations, ledit support étant situé à proximité du dispositif d'inscription/lecture.

**Claims**

**1.** Optical read/write device for an information medium (D1) comprising

- a transparent substrate (2) having an approximately plane face (20) carrying at least one pair of electrodes (E1-E2) defining an airgap area (3), and an optical source (1) illuminating the said electrodes with an optical beam (F1), **characterized in that** the dimension of the airgap corresponds approximately to the dimension of the information item to be written or read, **in that** the length of each electrode is approximately proportional to the wavelength of each incident electromagnetic wave so as to fulfil a resonance condition between the electrodes and the incident electromagnetic wave, and **in that** one component of the electric field of the incident electromagnetic wave is parallel to the direction of alignment of the electrodes of a pair of electrodes.

**2.** Device according to Claim 1, **characterized in that** the relationship between the length of an electrode and the wavelength of the incident electromagnetic wave is defined according to the the refractive indices of the substrate material and of the surrounding medium, the refractive index of the material constituting the electrodes, the thickness and the width of the electrodes.

**3.** Device according to Claim 2, **characterized in that**, with the electrodes being made of gold, the length of each electrode is proportional to the said wavelength so as to fulfil a resonance condition between the electrodes and the incident electromagnetic wave.

**4.** Device according to Claim 1, **characterized in that** the information medium is magnetic and that reading is accomplished by a magnetooptic effect.

**5.** Device according to Claim 4, **characterized in that** it comprises:

- two orthogonal pairs of electrodes (E1-E2 and E3-E4) arranged in a cross and defining, at the intersection of the cross, an area whose dimensions correspond approximately to the dimensions of the information item to be written or to be read;
- a light-collection device placed approximately in a direction perpendicular to the plane of the electrodes at the point of intersection of the cross and transmitting the light to a photodetection device.

**6.** Device according to Claim 1, **characterized in that** it includes a magnetic-field induction device (5) placed near the information medium and the said airgap area (3).

**7.** Device according to Claim 6, **characterized in that** the magnetic-field induction device and the substrate carrying the electrodes are placed on either side of the information medium.

8. Device according to Claim 1, **characterized in that** the distance between two electrodes of the same pair of electrodes is about ten or a few tens of nanometers.

9. Device according to Claim 1, **characterized in that** the electrodes of the same pair are symmetrical with respect to the centre of the said airgap area (3).

10. Device according to Claim 4, **characterized in that** a first pair of electrodes (E1-E2) is aligned in a first direction parallel to one component of the electric field of the electromagnetic wave and **in that** a second pair of electrodes is aligned in a second direction, which intersects the first direction substantially towards one edge of the airgap defined by the first electrode pair.

11. Device according to Claim 1, **characterized in that** each electrode has an elongate shape.

12. Device according to Claim 1, **characterized in that** each electrode has an approximately triangular shape and has one vertex of the triangle facing the said airgap area (3).

13. Device according to Claim 5, **characterized in that** the electrodes of the first pair of electrodes (E1-E2) have a triangular shape and the electrodes of the second pair of electrodes (E3-E4) have an elongate shape.

14. Device according to one of Claims 10 to 12, **characterized in that** the ends of the electrodes facing the airgap area (3) are rounded.

15. Device according to either of Claims 1 and 4, **characterized in that** the direction of the said optical beam (F1) is not perpendicular to the plane of the electrodes.

16. Device according to Claim 4, **characterized in that** at least that part of the airgap which lies between the electrodes is covered with a layer of a material having magnetooptic effects.

17. Device according to Claim 4, **characterized in that** it comprises a photodetection device (6) that includes a polarization analyser.

18. Device according to Claim 1, **characterized in that** the face of the substrate carrying the electrodes has a shape such that movement of an information medium with respect to these electrodes has the effect of creating an air cushion between the face of the substrate and the information medium.

19. Device according to Claim 18, **characterized in that** the said face of the said substrate is inclined with respect to the plane of the information medium.

20. Device according to Claim 1, **characterized in that** at least part of that surface of the substrate which is not occupied by the electrodes includes a layer of a wear-resistant material having a thickness at least equal to the thickness of the electrodes.

21. Use of the device according to Claim 9, **characterized in that** it is intended for reading/writing the information on an information medium in which the information is stored in the form of regions magnetized perpendicular to the plane of the medium, the magnetized regions of the information medium being located near the read/write device.

22. Use of the device according to Claim 10, **characterized in that** it is intended for reading/writing information on an information medium in which the information is stored in the form of regions magnetized parallel to the plane of the medium, the magnetized regions of the information medium being located near the read/write device.

23. Use of the device according to Claim 4, **characterized in that** it is intended for reading/writing information on an information medium which includes a layer of a material exhibiting magnetooptic effects, the said information medium being located near the read/write device.

24. Use of the device according to Claim 1, **characterized in that** it is intended for reading/writing information on optical information media, the said medium being located near the read/write device.

**Patentansprüche**

1. Optische Vorrichtung zum Schreiben auf einen bzw. zum Lesen von einem Informationsträger (D1), die ein transparentes Substrat (2), das eine im wesentlichen ebene Fläche (20) besitzt, die wenigstens ein Paar Elektroden (E1-E2) trägt, die einen Luftspaltbereich (3) begrenzen, und eine Lichtquelle (1), die die Elektroden mit Hilfe eines Lichtstrahlenbündels (F1) beleuchtet, umfaßt, **dadurch gekennzeichnet, daß** die Abmessung des Luftspalts im wesentlichen der Abmessung der zu schreibenden oder zu lesenden Information entspricht, daß die Länge jeder Elektrode im wesentlichen proportional zur Wellenlänge einer einfallenden elektromagnetischen Welle ist, um eine Resonanzbedingung zwischen den Elektroden und der einfallenden elektromagnetischen Welle sicherzustellen, und daß eine Komponente des elektrischen Feldes der einfallenden elektromagnetischen Welle zu der Richtung, auf die die Elektroden eines Elektrodenpaars ausgerichtet sind, parallel ist.

2. Vorrichtung nach Anspruch 1, **dadurch gekennzeichnet, daß** die Beziehung zwischen der Länge einer Elektrode und der Wellenlänge der einfallenden elektromagnetischen Welle in Abhängigkeit von den Brechungsindizes der Materialien des Substrats und des umgebenden Mediums, dem Brechungsindex des die Elektroden bildenden Materials und der Dicke und der Breite der Elektroden bestimmt ist.

3. Vorrichtung nach Anspruch 2, **dadurch gekennzeichnet, daß** die Länge jeder Elektrode dann, wenn die Elektroden aus Gold sind, zur Wellenlänge proportional ist, derart, daß eine Resonanzbedingung zwischen den Elektroden und der einfallenden elektromagnetischen Welle sichergestellt ist.

4. Vorrichtung nach Anspruch 1, **dadurch gekennzeichnet, daß** der Informationsträger magnetisch ist und daß das Lesen durch magnetooptische Wirkung erfolgt.

5. Vorrichtung nach Anspruch 4, **dadurch gekennzeichnet, daß** sie umfaßt:

   - zwei zueinander senkrechte Elektrodenpaare (E1-E2 und E3-E4), die kreuzförmig angeordnet sind und im Schnittpunkt des Kreuzes einen Bereich begrenzen, dessen Abmessungen im wesentlichen den Abmessungen der zu schreibenden oder zu lesenden Information entsprechen;

   - eine Lichtsammelvorrichtung, die im wesentlichen längs einer Richtung senkrecht zur Ebene der Elektroden am Schnittpunkt des Kreuzes angeordnet ist und das Licht zu einer Photodetektorsvorrichtung durchläßt.

6. Vorrichtung nach Anspruch 1, **dadurch gekennzeichnet, daß** sie eine Vorrichtung für die Induktion eines magnetischen Feldes (5) umfaßt, die in der Nähe des Informationsträgers und des Luftspaltbereichs (3) angeordnet ist.

7. Vorrichtung nach Anspruch 6, **dadurch gekennzeichnet, daß** die Vorrichtung für die Induktion des magnetischen Feldes und das Substrat, das die Elektroden trägt, beiderseits des Informationsträgers angeordnet sind.

8. Vorrichtung nach Anspruch 1, **dadurch gekennzeichnet, daß** der Abstand zwischen zwei Elektroden desselben Elektrodenpaars etwa zehn oder mehrere zehn Nanometer beträgt.

9. Vorrichtung nach Anspruch 1, **dadurch gekennzeichnet, daß** die Elektroden desselben Paars in bezug auf das Zentrum des Luftspaltbereichs (3) symmetrisch sind.

10. Vorrichtung nach Anspruch 4, **dadurch gekennzeichnet, daß** ein erstes Elektrodenpaar (E1-E2) auf eine erste Richtung parallel zu einer Komponente des elektrischen Feldes der elektromagnetischen Welle ausgerichtet ist und daß ein zweites Elektrodenpaar auf eine zweite Richtung ausgerichtet ist, die die erste Richtung im wesentlichen an einem Rand des Luftspalts, der durch das erste Elektrodenpaar bestimmt ist, schneidet.

11. Vorrichtung nach Anspruch 1, **dadurch gekennzeichnet, daß** jede Elektrode eine langgestreckte Form hat.

12. Vorrichtung nach Anspruch 1, **dadurch gekennzeichnet, daß** jede Elektrode eine im wesentlichen dreieckige Form hat und daß ein Scheitelpunkt des Dreiecks zu dem Luftspaltbereich (3) gerichtet ist.

13. Vorrichtung nach Anspruch 5, **dadurch gekennzeichnet, daß** die Elektroden des ersten Elektrodenpaars (E1-E2) eine dreieckige Form haben und daß die Elektroden des zweiten Elektrodenpaars (E3-E4) eine langgestreckte Form haben.

14. Vorrichtung nach einem der Ansprüche 10 bis 12, **dadurch gekennzeichnet, daß** die zum Luftspaltbereich (3) gerichteten Enden der Elektroden abgerundet sind.

15. Vorrichtung nach einem der Ansprüche 1 oder 4, **dadurch gekennzeichnet, daß** die Richtung des Lichtstrahlenbündels (F1) zu der Ebene der Elektroden nicht senkrecht ist.

16. Vorrichtung nach Anspruch 4, **dadurch gekennzeichnet, daß** wenigstens der Teil des Luftspalts, der sich zwischen den Elektroden befindet, mit einer Lage aus einem magnetooptische Effekte aufweisenden Material beschichtet ist.

17. Vorrichtung nach Anspruch 4, **dadurch gekennzeichnet, daß** sie eine Photodetektorsvorrichtung (6) umfaßt, die einen Polarisationsanalysator enthält.

18. Vorrichtung nach Anspruch 1, **dadurch gekennzeichnet, daß** die Fläche des Substrats, die die Elektroden trägt, eine Form besitzt, derart, daß eine Verlagerung eines Informationsträgers in bezug auf diese Elektroden von der Art ist, daß zwischen der Fläche des Substrats und dem Informationsträger ein Luftkissen erzeugt wird.

**19.** Vorrichtung nach Anspruch 18, **dadurch gekennzeichnet, daß** die Fläche des Substrats in bezug auf die Ebene des Informationsträgers geneigt ist.

**20.** Vorrichtung nach Anspruch 1, **dadurch gekennzeichnet, daß** wenigstens ein Teil der Oberfläche des Substrats, der nicht von den Elektroden belegt ist, eine Lage aus einem verschleißbeständigen Material, deren Dicke wenigstens gleich der Dicke der Elektroden ist, umfaßt.

**21.** Verwendung der Vorrichtung nach Anspruch 9, **dadurch gekennzeichnet, daß** sie zum Schreiben auf einen bzw. zum Lesen von einem Informationsträger bestimmt ist, in dem die Informationen in Form von zur Ebene des Trägers senkrecht magnetisierten Zonen gespeichert sind, wobei sich die magnetisierten Zonen des Informationsträgers in der Nähe der Schreib/Lese-Vorrichtung befinden.

**22.** Verwendung der Vorrichtung nach Anspruch 10, **dadurch gekennzeichnet, daß** sie zum Schreiben auf einen bzw. zum Lesen von einem Informationsträger bestimmt ist, in dem die Informationen in Form von zur Ebene des Trägers parallel magnetisierten Zonen gespeichert sind, wobei sich die magnetisierten Zonen des Informationsträgers in der Nähe der Schreib/Lese-Vorrichtung befinden.

**23.** Verwendung der Vorrichtung nach Anspruch 4, **dadurch gekennzeichnet, daß** sie zum Schreiben auf einen bzw. zum Lesen von einem Informationsträger bestimmt ist, der eine Lage aus einem magnetooptische Effekte besitzenden Material enthält, wobei sich der Informationsträger in der Nähe der Schreib/Lese-Vorrichtung befindet.

**24.** Verwendung der Vorrichtung nach Anspruch 1, **dadurch gekennzeichnet, daß** sie zum Schreiben auf einen bzw. zum Lesen von einem Informationsträger bestimmt ist, wobei sich der Träger in der Nähe der Schreib/Lese-Vorrichtung befindet.

DIÉLECTRIQUE

MÉTAL

ZONE
PROPAGATIVE

ZONE
D'ÉVANESCENCE

DIAPHRAGME
NANOMÉTRIQUE

**FIG.1a**

S1    DIODE LASER

PP

L1

SP1

L2

SP2

PD

B

I

**FIG.1b**

1

E→    F1

E1    3    E2    2

X    X'

20

D1    MO

5

**FIG.2a**

Y'

E4

E1    3    E2

X    X'

L'    L'

g    E3

Y

**FIG.2b**

FIG.2c

FIG.3a

FIG.3b

FIG.3c

FIG.3d

FIG.4

FIG.5

FIG.6

FIG.7a

FIG.7b